# EUROPÄISCHE PATENTANMELDUNG

(11) **EP 0 950 572 A2**
(43) Veröffentlichungstag der Anmeldung: **20.10.1999**
(21) Anmeldenummer: 99106842.0
(22) Anmeldetag: 07.04.1999
(51) Int. Cl.: B60R 11/02

(54) **Fahrzeugkonsole mit einer Haltevorrichtung für Autotelefon**

(30) Priorität: 18.04.1998 DE 19817346
(71) Anmelder: Volkswagen Aktiengesellschaft, 38436 Wolfsburg (DE)
(72) Erfinder: Vidakovic, Nikolaus, 38444 Wolfsburg (DE)

(57) **Zusammenfassung**

Es wird eine Fahrzeugkonsole mit einer Haltevorrichtung für ein Autotelefon (4) vorgeschlagen, die aus einer Seitenwand (2) einer Mittelkonsole (1) in eine Benutzungsposition verschwenkbar ist. Die Rückwand (6) der als einfache Schale (3) ausgebildeten Haltevorrichtung bildet eine bündige Abdeckung für den Aufnahmeraum (5), in dem sich das Autotelefon (4) in der Aufbewahrungsposition befindet.

## Beschreibung

Die Erfindung betrifft eine Fahrzeugkonsole mit einer Haltevorrichtung für ein Autotelefon nach dem Oberbegriff des Anspruchs 1.

Es ist allgemein bekannt, ein Handtelefon (Handy) in einer speziellen Halterung als Autotelefon zu benutzen. Ein derartiges Autotelefon läßt sich in eine an der Mittelkonsole seitlich angeschraubte Halterung einstecken und arretieren, wobei über die Halterung das Autotelefon an einer exteme Antenne und an die Stromversorgung des Fahrzeugs angeschlossen ist. Wird die Halterung beifahrerseitig seitlich an der Mittelkonsole angebracht, so wird dadurch der Freiraum im Fußraum des Beifahrers eingeschränkt. Außerdem kann durch ein derart angeordnetes Autotelefon eine Verietzungsgefahr für den Beifahrer in einer Unfallsituation entstehen.

Aus der DE 195 21 890 A1 ist eine bewegliche Haltevorrichtung für ein Autotelefon bekannt. Dieses Autotelefon läßt sich bei Bedarf aus dem Öffnungsbereich der Klappe des Handschuhkastens herausschwenken.

Aus der DE 195 39 784 A1 ist eine Einbauvorrichtung für Fahrzeuge bekannt, die eine lösbare Halterung eines Handtelefons darstellt und aus einem in einem Aufnahmeschacht eines Fahrzeugteils und einem darin längsbeweglich geführten Aufnahmefach besteht. Das Handtelefon läßt sich dabei beispielsweise aus einer Konsole horizontal herausziehen und dann nach oben in eine annähemd vertikale Position verschwenken.

Weiterhin ist eine Aufnahmekonsole für Autotelefonhörer aus der DE 195 39 066 A1 be kannt. Die den Autotelefonhörer aufnehmende Aufnahmekonsole ist seitlich zum Beifahrerfußraum hin ausklappbar an einer Seitenwand einer Mittelkonsole angeordnet. Durch Einklappen der den Autotelefonhörer tragenden Aufnahmekonsole wird eine verdeckte Unterbringung des Autotelefonhörers ermöglicht.

Die bekannten Einrichtungen zur Unterbringung eines Autotelefons oder eines Telefonhörers erfordern einen hohen konstruktiven Aufwand oder benötigen viel Platz für die schwenkbaren oder beweglichen Teile.

Aufgabe der Erfindung ist es, eine Fahrzeugkonsole mit einer Haltevorrichtung für ein Autotelefon zu schaffen, die mit möglichst einfachen Mitteln eine verdeckte Unterbringung eines sich in der Aufbewahrungsposition befindlichen Autotelefons ermöglicht.

Diese Aufgabe 'wird mit den Merkmalen des Anspruchs 1 gelöst.

Gemäß Anspruch 1 ist die Haltevorrichtung für das Autotelefon eine das Autotelefon teilweise umschließende Schale, deren eine Außenseite den in der Fahrzeugkonsole vorgesehenen Aufnahmeraum, in dem sich das Autotelefon in der Aufbewahrungsposition befindet, bündig abdeckt.

Die Haltevorrichtung ist äußerst einfach aufgebaut und hat die Doppelfunktion, nämlich das Autotelefon aufzunehmen und gleichzeitig als Abdeckung des Aufnahmeraums zu dienen. Die Schale bildet damit eine Haltevorrichtung für ein Autotelefon, die als einstückiges Kunststoffteil hergestellt sein kann. Damit wird eine kostengünstig herstellbare Aufbewahrungsvorrichtung für ein Autotelefon geschaffen, die eine diebstahlgeschützte, verdeckte Unterbringung des Autotelefons ermöglicht. In der Aufbewahrungsposition kann die Haltevorrichtung auch mittels einer herkömmlichen Schließeinrichtung abschließbar sein.

Um eine gute Lesbarkeit der Tastatur und der Anzeige des Autotelefons zu gewährteisten, liegt das Autotelefon bevorzugt vertikal stehend in der Schale ein. Dies läßt sich vorteilhaft bei einer Unterbringung in der beifahrerseitigen Seitenwand der Mittelkonsole realisieren. Dort kann das Autotelefon auch dann noch untergebracht werden, wenn an der Frontseite der Mittelkonsole kein Freiraum mehr zur Verfügung steht.

Die für das vertikal stehend angeordnete Autotelefon vorgesehene Schale besitzt vorzugsweise eine Rückwand, die eine bündige Abdeckung für den in der Fahrzeugkonsole vorge sehenen Aufnahmeraum bildet, wenn sich das Autotelefon in der Aufbewahrungsposition befindet. Die Schale kann dabei um eine vertikale Achse schwenkbar gelagert sein und kann in der Aufnahmeposition lösbar einrasten. Hierzu können herkömmliche Rastelemente eingesetzt werden, die bei erneutem Druck auf die Rückwand der Schale ein Lösen der Rastverbindung ermöglichen, wobei dann mittels Federkraft die Schale von der Aufbewahrungsposition in eine Benutzungsposition bzw. Entnahmeposition bewegbar sein kann.

Gemäß einer Weiterbildung der Erfindung kann die Schale auf einen Schlitten horizontal aus der Fahrzeugkonsole ausfahrbar gelagert sein. Diese Unterbringung des Autotelefons, bei der dieses mittels einer Linearbewegung aus einem Aufnahmeraum in eine Benutzungsposition bewegbar ist, kann beispielsweise im Bereich der Armaturentafel Verwendung finden. Durch eine zusätzliche Schwenkbewegung läßt sich das Autotelefon in eine optimale Benutzungsposition bringen.

Auch bei der Ausführung, bei der die Schale linear verschiebbar angeordnet ist, kann eine Außenseite, nämlich die Unterseite der Schale, in der Aufbewahrungsposition eine bündige Abdeckung des Aufnahmeraums bilden. Somit besitzt auch diese Ausführung eine Schale für das Autotelefon mit der Doppelfunktion als Halteelement und als Abdeckelement.

Besonders vorteilhaft ist es, die Schale mittels Federkraft aus der Aufbewahrungsposition in die Benutzungsposition zu bewegen. Dadurch wird die Handhabung des Autotelefons be trächtlich erleichtert. Es genügt ein einfaches Antippen der sichtbaren Außenseite der Schale, um diese zu Entriegeln und mittels Federkraft in die Benutzungsposition zu bringen. Durch eine entgegengesetzte Bewegung wird die Schale in die Aufbewahrungsposition gebracht, wo sie mittels eines Rast- oder Riegelelements lösbar arretiert 'wird.

Die Erfindung 'wird anhand der Zeichnung näher erläutert.

Es zeigen:
- Fig. 1: die Ansicht einer Fahrzeugkonsole mit seitlich angeordneter Haltevorrichtung für ein Autotelefon,
- Fig. 2: den Querschnitt durch die in Figur 1 dargestellte Fahrteugkonsole im Bereich der Haltevorrichtung in vereinfachter Darstellung,
- Fig. 3: die 'Vorderansicht einer als einstückige Schale ausgebildeten Haltevorrichtung für ein Autotelefon,
- Fig. 4: eine linear aus einem Aufnahmeraum herausschiebbaren Haltevorrichtung und
- Fig. 5: den Querschnitt einer Fahrzeugkonsole im Bereich der als einstückige Schale ausgebildeten Haltevorrichtung.

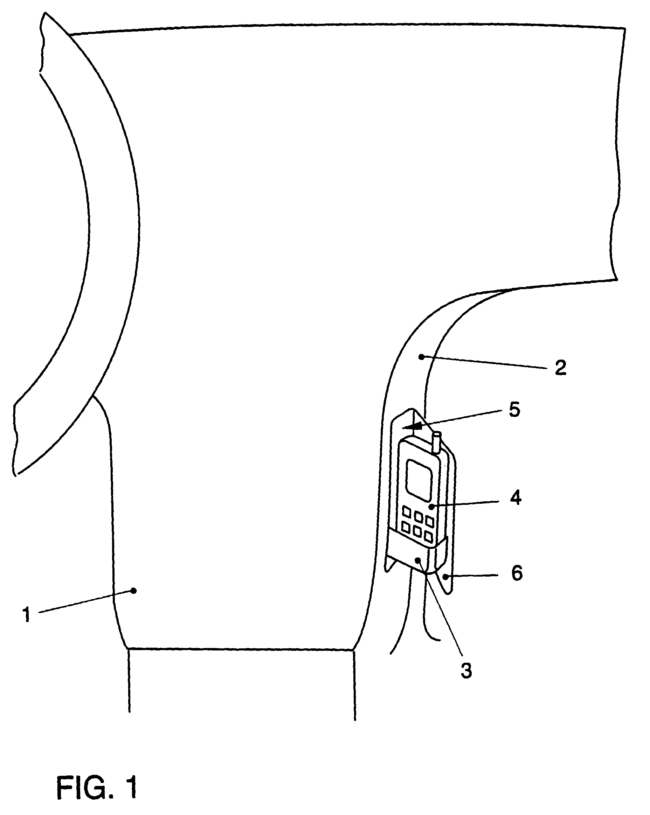

Figur 1 zeigt insbesondere die als Mittelkonsole 1 ausgebildete Fahrzeugkonsole eines Fahrzeugs, an deren beifahrerseitiger Seitenwand 2 eine um eine vertikale Achse schwenkbare Schale 3 angeordnet ist. Die Schale 3 ermöglicht eine vertikal stehende Unterbringung eines Autotelefons 4, welches hier als Handtelefon (Handy) dargestellt ist. Das Autotelefon 4 befindet sich im dargestellten Ausführungsbeispiel in der Benutzungsposition und kann in einen Aufnahmeraum 5 verschwenkt werden, so daß die an der Schale 3 angebrachte Rückwand 6 den Aufnahmeraum 5 bündig abdeckt.

Die Rückwand 6 ist vorzugsweise ein Teil der einstückig ausgebildeten Schale 3.

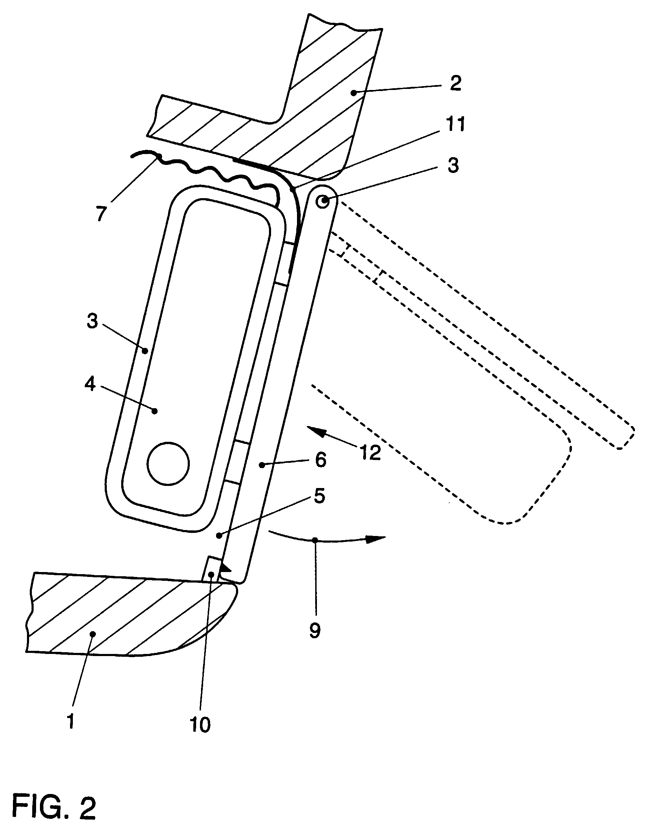

Figur 2 zeigt den Querschnitt der Fahrzeugkonsole von Figur 1 im Bereich der Schale 3 in schematischer Darstellung. Dabei wird mit unterbrochenen Linien die in Figur 1 dargestellte Benutzungsposition angedeutet, während mit durchgezogenen Linien die Aufbewahrungsposition dargestellt wird. Die als Halterung dienende Schale 3 ist über ein elektrisches Kabel 7 mit der Stromversorgung des Fahrzeugs und mit einer nicht dargestellten Außenantenne verbunden. Das in der Schale 3 gehaltene Autotelefon 4 ist über nicht dargestellte, in der Schale 3 angeordnete Kontakte mit dem Kabel 7 und somit mit der Stromversorgung des Fahrzeugs und mit der Außenantenne verbunden.

Die Rückwand 6 Ist zusammen mit dem Autotelefon 4 um die vertikale Achse 8 entsprechend der Pfeilrichtung 9 verschwenkbar. In der Aufbewahrungsposition liegt die Rückwand 6 an einem nur schematisch dargestellten Rastelement 10 an. Die dargestellte Rastverbindung kann durch einen äußeren Druck auf die Rückwand 6 gelöst werden. Eine Blattfeder 11 drückt daraufhin die aus Rückwand 6 und Schale 3 bestehende Haltevorrichtung 12 in die mit unterbrochenen Linien dargestellte Benutzungsposition.

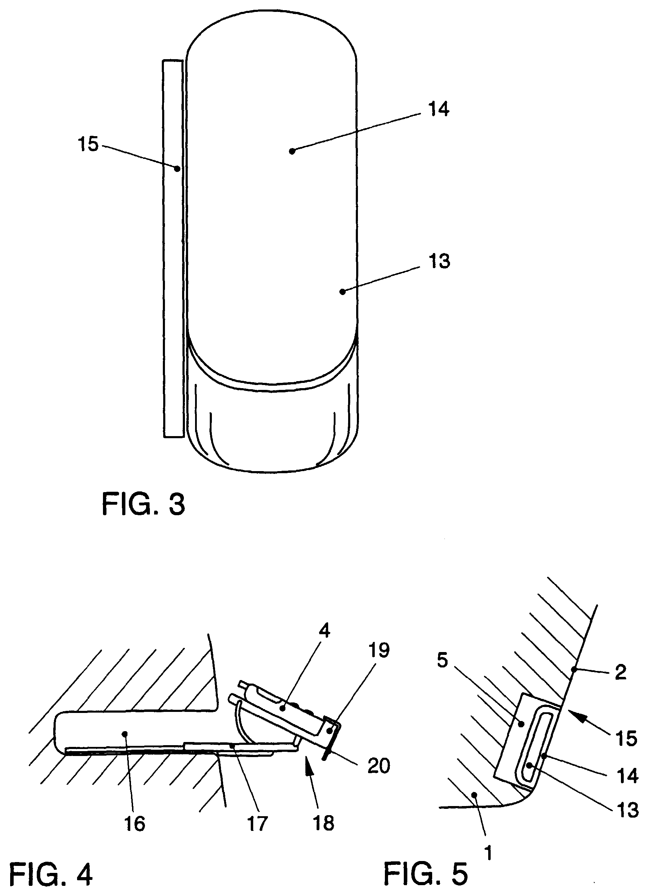

Figur 3 zeigt eine bevorzugte Ausführung einer als Haltevorrichtung für ein Autotelefon dienenden Schale 13, die eine hochgezogene Rückwand 14 besitzt. An der linken Seite der als Kunststoff-Spritzgußteil hergestellten Schale 13 ist ein Filmschamier 15 angespritzt, welches eine schwenkbewegliche Befestigung der Haltevorrichtung ermöglicht. In der stark vereinfachten Querschnittdarstellung von Figur 5 ist die Anbringung der Haltevorrichtung von Figur 3 gezeigt. Mit der dargestellten Ausführung läßt sich eine sehr einfache Unterbringung eines Autotelefons an der Seitenwand 2 einer Konsole 1 in einem Aufnahmeraum 5 erreichen.

Figur 4 zeigt eine Ausführung mit einem linear aus einem Aufnahmeraum 16 herausbewegbaren Autotelefon 4. Eine auf einem teleskopartigen Schlitten 17 um eine horizontale Achse 18 schwenkbare, als Haltevorrichtung dienende Schale 19 nimmt das Autotelefon 4 auf. Wie die oben erwähnten Schalen 3, 13 umschließt auch diese Schale 19 das Autotelefon 4 teilweise. Eine Außenseite der Schale 19, nämlich hier die Unterseite 20, bildet eine bündige Abdeckung für den Aufnahmeraum 16, wenn die Schale 19 mit dem Autotelefon 4 in den Aufnahmeraum 16 in die Aufbewahrungsposition eingeschoben ist.

## Patentansprüche

1. Fahzeugkonsole mit einer aus der Wand der Fahrzeugkonsole herausbewegbar angeordneten Haltevorrichtung für ein Autotelefon (4),
**dadurch gekennzeichnet,**
daß die Hattevormichtung eine das Autotelefon (4) teilweise umschließende Schale (3, 13, 19) ist, deren eine Außenseite den in der Fahrzeugkonsole vorgesehenen Aufnahmeraum (5, 16), in dem sich das Autotelefon (4) in der Aufbewahrungsposition befindet, bündig abdeckt.

2. Fahrzeugkonsole nach Anspruch 1,
**dadurch gekennzeichnet,**
daß das Autotelefon (4) vertikal stehend in der Schale (3, 13) einliegt, die sich beifahrerseitig in der Seitenwand (2) der als Mittelkonsole (1) ausgebildeten Fahrzeugkonsole befindet.

3. Fahrzeugkonsole nach Anspruch 2,
**dadurch gekennzeichnet,**
daß die Rückwand (6, 14) der Schale (3, 13) eine bündige Abdeckung für den in der Fahrzeugkonsole vorgesehenen Aufnahmeraum (5) bildet.

4. Fahrzeugkonsole nach einem der vorhergehenden Ansprüche,
**dadurch gekennzeichnet,**
daß die in der Fahrzeugkonsole vorgesehene Schale (3, 13) um eine vertikale Achse schwenkbar ist.

5. Fahrzeugkonsole nach einem der Ansprüche 1 bis 3,
**dadurch gekennzeichnet,**
daß die Schale (19) auf einem Schlitten (17) horizontal aus der Fahrzeugkonsole ausfahrbar gelagert ist.

6. Fahrzeugkonsole nach Anspruch 5,
**dadurch gekennzeichnet,**
daß die Unterseite (20) der Schale (19) in der Aufbewahrungsposition eine bündige Abdeckung für den in der Fahrzeugkonsole vorgesehenen Aufnahmeraum (16) bildet.

7. Fahrzeugkonsole nach einem der vorhergehenden Ansprüche,
**dadurch gekennzeichnet,**
daß die Schale (3, 13, 19) mittels Federkraft aus der Aufbewahrungsposition in eine Benutzungsposition bewegbar ist und ein Rastelement (10) oder Riegelelement die Schale (3) in der Aufbewahrungsposition lösbar festhält.

8. Fahrzeugkonsole nach Anspruch 7,
**dadurch gekennzeichnet,**
daß die Rast- oder Verriegelungsposition durch antippen der sichtbaren Außenseite der Schale (3, 13, 19) ausgerastet bzw. entriegelt wird.
